# EUROPÄISCHE PATENTANMELDUNG

(11) **EP 1 593 427 A1**
(43) Veröffentlichungstag der Anmeldung: **09.11.2005**
(21) Anmeldenummer: 05007476.4
(22) Anmeldetag: 06.04.2005
(51) Int. Cl.: B01J 19/32

(54) **Packungskolonne mit Randabweisern**

(30) Priorität: 04.05.2004 DE 102004021984
(71) Anmelder: BASF Aktiengesellschaft, 67056 Ludwigshafen (DE)
(72) Erfinder: Kashani-Shirazi, Nawid, 68161 Mannheim (DE)

(57) **Zusammenfassung**

Kolonne enthaltend regelmäßig strukturierte Packungselemente und Randabweiser, wobei die Randabweiser am Kolonnenmantel befestigt werden und in Abständen von 0,05 m bis 1 m längs der Höhe der Kolonne angeordnet sind.

## Beschreibung

Die vorliegende Erfindung betrifft eine Verbesserung einer Kolonne enthaltend strukturierte Packungselemente und Randabweiser.

Es ist bekannt, Packungselemente (Stoffaustauschpackungen) in einer Kolonne ringsum mit Randabweisern zu versehen, welche die an der Kolonnenwand herunterfließende Flüssigkeit zur Stoffaustauschpackung leiten. Derartige Systeme sind beispielsweise in DE 43 36 985 C2 beschrieben. Hierbei sind die Randabweiser an den Stoffaustauschpaketen befestigt (Spalte 1, Zeile 29; Spalte 2, Zeile 9).

Diese an den Packungen befestigten Randabweiser bestehen üblicherweise aus Gewebe oder Metall, Kombinationen aus beiden kommen seltener vor.
Randabweiser aus Blech haben in erster Linie die Aufgabe die Packung in der Kolonne zu zentrieren.
Randabweiser aus Gewebe leiten die Flüssigkeit besser von der Kolonnenwand ab. Vor allem bei Trennaufgaben mit sehr hohen Anforderungen an die Reinheit der Produkte ist man bestrebt, eine sehr gute Abdichtung der Packungselemente zur Kolonnenwand zu erreichen.

Nachteil der bekannten Bauweise ist die aufwändige Fertigung der Packungselemente mit den Randabweisern. Des weiteren erhöhen sich die Kosten durch die Anbringung der Randabweiser an jedem Packungselement. Bei segmentierten Packungen ist der Randabweiser ferner nicht durchgängig, was negative Auswirkungen auf die Produktreinheit hat, da eine vollständige Randabdichtung durch Abfuhr der gesamten Flüssigkeit von der Kolonnenwand nicht gewährleistet ist. Weiterhin werden bei dieser Konzeption an den Einbau der Packungselemente in die Kolonne besonders hohe Anforderungen gestellt, da sich im Fall einer leichten Schieflage der Packungselemente dies zusätzlich unmittelbar auf die Positionierung der Randabweiser auswirkt, wodurch die Effektivität und Wirtschaftlichkeit des Verfahrens verschlechtert werden kann.

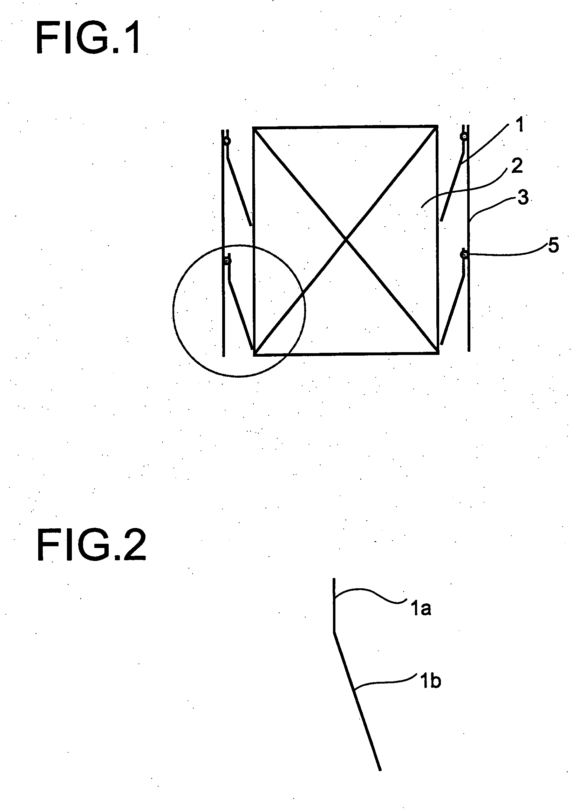

In der DE 2364739 ist eine Kolonne enthaltend eine Füllkörperschüttung (Nr. 2 in Fig. 1) auf einem Stützgitter (N. 5 in Fig. 1) offenbart. Hierbei werden Ringe, welche dicht an der Wand befestigt sind, eingesetzt, um die Flüssigkeit auf die wandnahen Füllelemente zu richten. Auf Kolonnen enthaltend strukturierte Packungen finden sich hierbei keinerlei Hinweise und wären vom Fachmann auch nicht in Erwägung gezogen worden, da er Instabilitäten in der Packung befürchtet hätte.

Es stellte sich somit die Aufgabe, eine verbesserte Kolonne enthaltend regelmäßig strukturierte Packungen und Randabweiser zu finden, welche den genannten Nachteilen abhilft und eine effektive und verfahrenstechnisch einfache Durchführung des Verfahrens ermöglicht.

Demgemäss wurde eine Kolonne enthaltend regelmäßig strukturierte Packungselemente und Randabweiser gefunden, welche dadurch gekennzeichnet ist, dass die Randabweiser am Kolonnenmantel befestigt werden und in Abständen von 0,05 m bis 1 m längs der Höhe der Kolonne angeordnet sind.

Die erfindungsgemäße Ausgestaltung der Kolonne ermöglicht vorteilhafterweise
eine deutlich einfachere Herstellung der Packungselemente, da hier kein Anbringen der Randabweiser erforderlich ist. Weiterhin wird hierbei eine bessere Randabdichtung durch Abfuhr der gesamten Flüssigkeit von der Kolonnenwand gewährleistet, was die Effektivität des Verfahrens erhöht und darüber hinaus höhere Reinheiten ermöglicht. Zudem gestaltet sich ein Punktschweißen an der ebenen Kolonnenwand einfacher als an dem gewellten Blech der Packungen.

Die Randabweiser sind vorteilhafterweise am gesamten Umfang der Kolonne durchgängig befestigt. Dies lässt sich einfach und bewerkstelligen und ist außerdem preiswerter als eine Montage an den Packungselementen.

Hierbei kann die erfindungsgemäße Befestigung der Randabweiser an der Kolonne ebenfalls sowohl die Funktion des Abstreifens der Flüssigkeit als auch der des Zentrierens erfüllen.

Als erfindungsgemäß verwendete Randabweiser können beispielsweise jene eingesetzt werden, wie sie in der DE 43 36 985 beschrieben sind wobei jedoch die Befestigung am Kolonnenmantel und nicht an der strukturierten Packung erfolgt.

Die Randabweiser bestehen aus Blech- und/oder (Draht-)gewebestreifen, in welche Schlitze und/oder Aussparungen eingestanzt und/oder geschnitten werden. Diese werden anschließend entsprechend der bisherigen Kenntnisse von Randabweisern vorgeformt und an der Kolonnenwand befestigt.

Die Befestigung der Randabweiser erfolgt vorzugsweise über Punktschweißen. Vorteilhafterweise kann dies direkt bei der Herstellung des Kolonnenmantels bewerkstelligt werden. Die Anzahl der Schweißpunkte richtet sich hierbei nach den jeweiligen Anforderungen. Neben dem Punktschweißen sind auch andere Befestigungsmethoden wie heften, schweißen, löten, nieten, schrauben möglich.

Die Randabweiser werden am Kolonnemantel in Abständen von etwa 0,05 bis 1 m, bevorzugt 0,05 bis 0,3 m, besonders bevorzugt 0,05 bis 0,2 m längs der Höhe der Kolonne angeordnet.

Durch die Verwendung unterschiedlicher Materialien bei den am Kolonnenmantel befestigten Randabweisern, wie z.B. Blech und Drahtgewebe, können unterschiedlichen Funktionen realisiert werden. Dabei erweist sich eine alternierende Anordnung über die Höhe eines Packungselementes als besonders sinnvoll, da die federnden Randabweiser die Packung zentrieren und die Geweberandabweiser die Flüssigkeit ableiten.

Im Fall von vertikal räumlich unterteilten Kolonnen (z.B. Trennwandkolonnen) werden die erfindungsgemäß angeordneten Randabweiser auch am Trennblech befestigt, wodurch eine umfassende Abdichtung gewährleistet wird.

Im folgenden wird die erfindungsgemäße Vorrichtung anhand von Zeichnungen exemplarisch näher beschrieben.

In Figur 1 ist die Seitenansicht einer Kolonne im Schnitt dargestellt. Es ist der Randabweiser (1) zu sehen, welcher mittels eines Befestigungspunkts (5) z.B. durch Punktschweißung am Kolonnenmantel (3) befestigt ist. Weiterhin ist die in der Kolonne enthaltene Packung (2) zu sehen.

In Figur 2 ist der Randabweiser aus der Figur 1 im Detail zu sehen. Der Teilbereich 1 a zeigt den zur Befestigung an der Kolonnenwand vorgesehenen Teil, der Teilbereich 1 b zeigt den zur Ableitung der Flüssigkeit von der Kolonnenwand in die Packung vorgesehenen Teil.

Generell erweist es sich bei der erfindungsgemäßen Anordnung der Randabweiser als besonders vorteilhaft, dass durch Orientierung des Teilsegments 1 b in Richtung des Kolonnenmittelpunkts aufgrund des kleiner werdenden Durchmessers die einzelnen Randabweiser sich eng nebeneinander liegend oder gar überlappend orientieren, wodurch eine weitere Abdichtung hinsichtlich der herunterrieselnden Flüssigkeit gewährleistet wird.

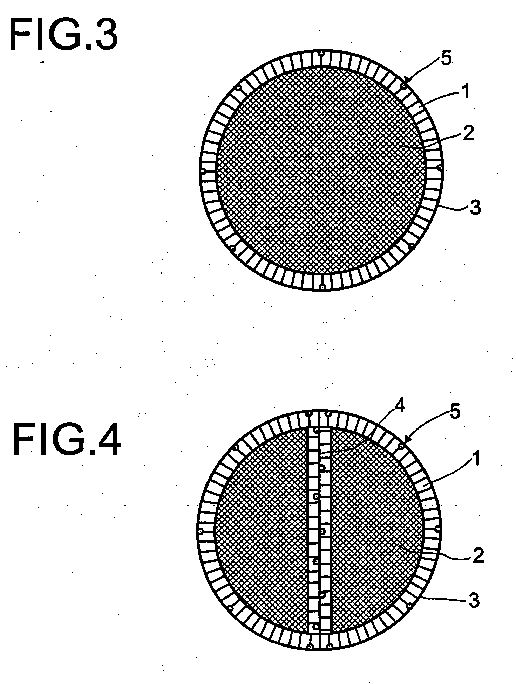

In den Figuren 3 und 4 sind Schnitte der Kolonne in der Draufsicht zu sehen. Auch hier ist der Kolonnenmantel (3) mit den mittels der Befestigungspunkte (5) fixierten Randabweiser (1) zu sehen. In Figur 4 handelt es sich dabei um eine Trennwandkolonne mit der Trennwand (4). Hier sind die Randabweiser ebenfalls an der Trennwand befestigt, wodurch vorteilhafterweise eine umfassende Rückleitung der Flüssigkeit in die Packung gewährleistet werden kann.

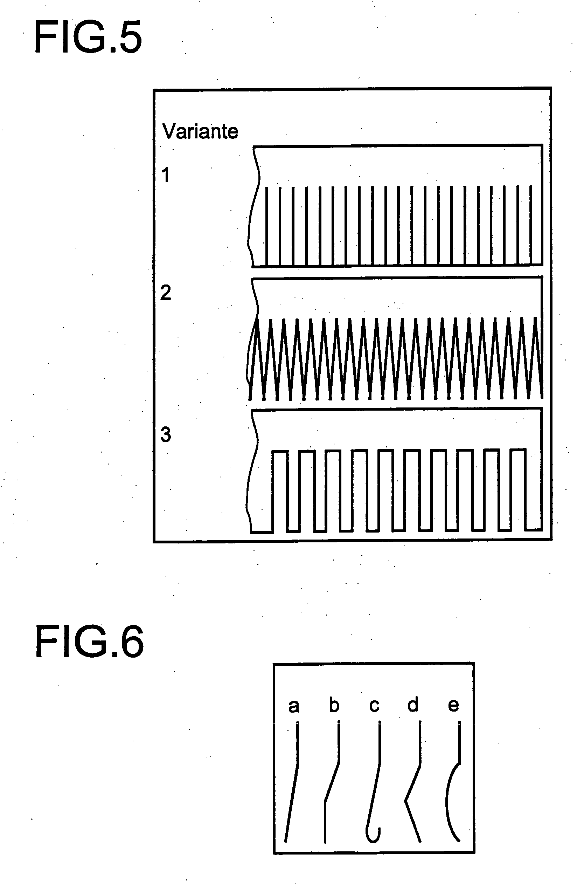

Figur 5 zeigt beispielhaft mögliche Ausgestaltungen der Randabweiser in der Seitenansicht. Besonders gut eignet sich meist eine trapezförmige Form, wie sie hier unter Nr. 3 dargestellt ist. Durch entsprechende Gestaltung der Ausschnitte, kann der o.g.

Tendenz der Überlappung der einzelnen Segmente bei der Orientierung hin zur Kolonnenmitte in gewissem Umfang begegnet werden.

Figur 6 zeigt einige mögliche Variationen der Anordnung der Randabweiser in der Seitenansicht. Besonders empfehlen sich für viele Anwendungsfälle die unter "a" und "b" gezeigten Ausführungsformen.

Die erfindungsgemäße Vorrichtung ist verfahrenstechnisch einfach und kostengünstig herzustellen. Sie gewährleistet eine hohe Randabdichtung hinsichtlich der an der Kolonnenwand herabrieselnden Flüssigkeit, wodurch die Effektivität des Verfahrens sowie die Produktreinheit erhöht wird.

## Patentansprüche

1. Kolonne enthaltend regelmäßig strukturierte Packungselemente und Randabweiser, **dadurch gekennzeichnet, dass** die Randabweiser am Kolonnenmantel befestigt werden und in Abständen von 0,05 m bis 1 m längs der Höhe der Kolonne angeordnet sind.

2. Kolonne nach Anspruch 1, **dadurch gekennzeichnet, dass** die Randabweiser am Kolonnenmantel in Abständen von 0,05 m bis 0,2 m längs der Höhe der Kolonne angeordnet sind.

3. Kolonne nach Ansprüchen 1 oder 2, **dadurch gekennzeichnet, dass** die Anbringung der Randabweiser in vertikal räumlich unterteilten Kolonnen erfolgt.

4. Kolonne nach Anspruch 3, **dadurch gekennzeichnet, dass** die Anbringung in einer Trennwandkolonne erfolgt.

5. Kolonne nach Ansprüchen 1 bis 4, **dadurch gekennzeichnet, dass** die Anbringung der Randabweiser durch Punktschweißen erfolgt.

6. Kolonne nach Ansprüchen 1 bis 5, **dadurch gekennzeichnet, dass** Randabweiser aus Blech oder/und Drahtgewebe verwendet werden.

7. Kolonne nach Ansprüchen 1 bis 6, **dadurch gekennzeichnet, dass** über die Höhe der Kolonne Randabweiser aus unterschiedlichen Materialien verwendet werden.

8. Kolonne nach Anspruch 7, **dadurch gekennzeichnet, dass** die unterschiedlichen Materialien über die Höhe der Kolonne betrachtet alternierend eingesetzt werden.

9. Kolonne nach Ansprüchen 1 bis 8, **dadurch gekennzeichnet, dass** Randabweiser enthalten sind, welche eine Federwirkung aufweisen und dadurch eine Zentrierung der Packungselemente bewirken.
